# EUROPÄISCHE PATENTSCHRIFT

(11) **EP 1 254 040 B1**
(45) Veröffentlichungstag und Bekanntmachung des Hinweises auf die Patenterteilung: **03.03.2004**
(21) Anmeldenummer: 00975789.9
(22) Anmeldetag: 22.09.2000
(51) Int. Cl.: B60R 21/13, B62D 33/06, E05D 11/10

(54) **SICHERUNGSEINRICHTUNG**
SECURITY DEVICE
DISPOSITIF DE SECURITE

(30) Priorität: 07.02.2000 DE 20002106 U
(43) Veröffentlichungstag der Anmeldung: 06.11.2002
(73) Patentinhaber: Fritzmeier Systems GmbH & Co., 85655 Grosshelfendorf (DE)
(72) Erfinder: RASTEL, Uwe, 85655 Grosshelfendorf (DE)
(74) Vertreter: Winter, Brandl, Fürniss, Hübner, Röss, Kaiser, Polte, Partnerschaft
(86) Internationale Anmeldenummer: PCT/DE2000/003306
(87) Internationale Veröffentlichungsnummer: WO 2001/058725

(56) Entgegenhaltungen:
- US-A- 5 042 835
- US-A- 5 971 434

## Beschreibung

Die Erfindung betrifft eine Sicherungseinrichtung für eine Fahrerkabine eines Nutzfahrzeuges, beispielsweise eines Gabelstaplers gemäß dem Oberbegriff des Anspruchs 1.

Bei einer derartigen, aus der gattungsbildenden DE 298 18 149 U1 bekannten Sicherungseinrichtung erstreckt sich zwischen zwei benachbarten Säulen einer Fahrerkabine ein Rückhaltebügel, dessen einer Endabschnitt über ein Gelenk an einer Säule, beispielsweise der B-Säule einer Fahrerkabine befestigt ist. An der anderen Säule, beispielsweise der A-Säule ist eine Verriegelung vorgesehen, über die der Haltebügel in seiner Schließposition festlegbar ist.

Nachteilig bei dieser Lösung ist, daß ein erheblicher fertigungstechnischer Aufwand erforderlich ist, um einerseits die Verriegelungseinrichtung und andererseits das Schwenkgelenk an den beiden Säulen zu befestigen. Insbesondere der an der A-Säule befestigte Beschlag für die Verriegelungseinrichtung ragt in den Einstiegsbereich hinein, so daß eine Behinderung oder gar Gefährdung der Bedienperson für das Nutzfahrzeug bei geöffnetem Haltebügel nicht auszuschließen ist.

Demgegenüber liegt der Erfindung die Aufgabe zugrunde, eine kompaktbauende Sicherungseinrichtung zu schaffen, die mit minimalen fertigungstechnischen Aufwand herstellbar und montierbar ist.

Diese Aufgabe wird durch eine Sicherungseinrichtung für eine Fahrerkabine mit den Merkmalen des Anspruchs 1 gelöst.

Erfindungsgemäß hat die Sicherungseinrichtung einen frei auskragenden Haltearm, der einseitig an einer Säule der Fahrerkabine, beispielsweise der B-Säule befestigt ist. Die Verriegelung für den Haltearm ist im Bereich des Schwenkgelenkes angeordnet, so daß ein einziger, gemeinsamer Beschlag zur Aufnahme der Verriegelungseinrichtung und des Schwenkgelenks vorgesehen werden kann. Eine derartige Lösung ist wesentlich einfacher als die gattungsgemäße Rückhaltevorrichtung montierbar, da durch das Zusammenfassen des Schwenkgelenkes und der Verriegelungseinrichtung nur ein einziger Montageschritt erforderlich ist. Bei der bekannten Lösung mußten die beiden Beschläge (Schwenkgelenk, Verriegelung) in zwei getrennten Montageschritten befestigt und zueinander ausgerichtet werden.

Da sich an der anderen Säule, beispielsweise der A-Säule keinerlei Beschlag befindet, ist eine Behinderung der Bedienperson praktisch ausgeschlossen. Ein weiterer Vorteil liegt darin, daß sich der Haltearm nicht über die Gesamtbreite der Fahrerkabinenöffnung erstrecken muß, sondern in einem Abstand zur benachbarten Säule, beispielsweise der A-Säule enden kann. Dieser Abstand ist so gewählt, daß die Sicherheit der Bedienperson gewährleistet ist.

Um eine sichere Verriegelung zu gewährleisten, wird die Wirkachse der Verriegelung in einem vorbestimmten Abstand zur Gelenkachse ausgebildet.

Das die Gelenkachse bildende Schwenkgelenk wird vorzugsweise mittels einer Klemmanschette der Säule der Fahrerkabine befestigt, so daß an der Säule selbst keine Montagebohrungen oder ähnliches vorgesehen werden müssen. Diese Klemmanschette ermöglicht auch das Nachrüsten der erfindungsgemäßen Sicherungseinrichtung bei älteren Fahrzeugen.

Zur Aufnahme der Verriegelung wird der Haltearm gemäß einem Ausführungsbeispiel der Erfindung über das Schwenkgelenk hinaus verlängert, wobei an diesem verlängerten Teil ein Verriegelungselement ausgebildet wird, das mit einem Verriegelungsteil der Klemmanschette zusammenwirkt, um den Haltearm zu verriegeln. Bei dieser Lösung wird somit die Verriegelung in den die Säule umgebenden Bereich der Klemmanschette verlegt, so daß ein besonders kompakter Aufbau realisierbar ist.

Bei einer alternativen Lösung wird das Schwenkgelenk an dem vom Haltearm entfernten Teil der Säule vorgesehen, während die Verriegelung an der gegenüberliegenden tragarmseitigen Seite der Säule ausgebildet ist. Diese Variante ermöglicht es, bei einem sehr kompakten Aufbau einen großen Abstand zwischen Verriegelungsachse und Schwenkachse auszubilden, so daß ein zuverlässiges Schließen des Haltearms auch bei hohen Belastungen gewährleistet ist.

Die Verriegelung wird vorzugsweise über ein Betätigungselement gelöst, das an dem frei auskragenden Haltearm vorgesehen ist. Dieses Betätigungselement kann über eine Zugverbindung, beispielsweise über einen Bowdenzug mit einem Verriegelungsteil verbunden sein, so daß durch Betätigung des Betätigungselementes der Verriegelungseingriff gelöst werden kann.

Eine besonders stabile Sicherungseinrichtung mit minimalem Baugewicht erhält man, wenn der Haltearm als Rohrbügel ausgebildet wird. Der Haltebügel kann umschäumt oder mit einem Polster versehen werden, um die Verletzungsgefahr zu verringern und die ästhetische Anmutung der Sicherungseinrichtung zu verbessern.

Sonstige vorteilhafte Weiterbildungen der Erfindung sind Gegenstand der weiteren Unteransprüche.

Im folgenden werden bevorzugte Ausführungsbeispiele der Erfindung anhand schematischer Zeichnungen näher erläutert. Es zeigen:
Figur 1 eine Teildarstellung einer mit einer erfindungsgemäßen Sicherungseinrichtung versehenen Fahrerkabine;
Figur 2 die Sicherungseinrichtung aus Figur 1 in vergrößerter Darstellung;
Figur 3 eine Draufsicht auf ein weiteres Ausführungsbeispiel einer Sicherungseinrichtung;
Figur 4 Teile einer Klemmanschette zur Befestigung der Sicherungseinrichtungen gemäß der Figuren 1 bis 3;
Figur 5 ein weiteres Ausführungsbeispiel einer Sicherungseinrichtung und
Figur 6 eine Draufsicht auf die Sicherungseinrichtung aus Figur 5 im geschlossenen und verschwenkten Zustand.

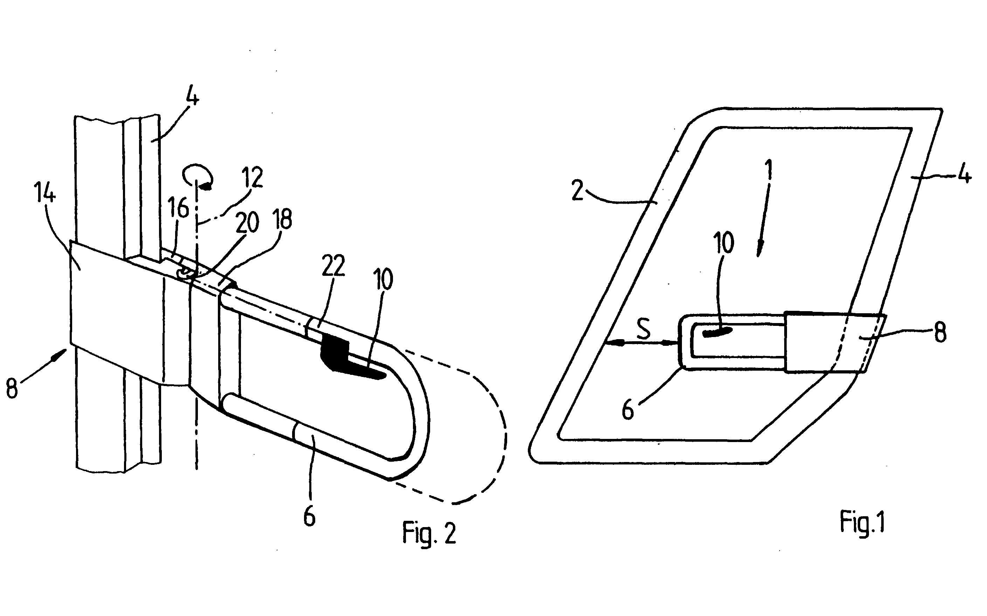

Figur 1 zeigt eine erfindungsgemäße Sicherungseinrichtung 1, die im Einstiegsbereich einer Fahrerkabine mit einer A-Säule 2 und einer B-Säule 4 ausgebildet ist. Bei dem in Figur 1 dargestellten Ausführungsbeispiel hat die Sicherungseinrichtung 1 einen Haltearm 6, der mittels einer Klemmanschette 8 an der B-Säule angelenkt ist. Wie im folgenden noch näher erläutert wird, hat die Klemmanschette 8 ein den Tragarm 6 tragendes Schwenkgelenk sowie eine Verriegelungseinrichtung, die über ein am Haltearm 6 gelagertes Betätigungselement 10 entriegelbar ist.

Der frei auskragende Endabschnitt des Haltearms 6 endet in einem Abstand S zur A-Säule der so gewählt ist, daß die sich in der Fahrerkabine aufhaltende Bedienperson nicht durch die von den Säulen 2, 4 begrenzte Öffnung hinausfallen kann.

Figur 2 zeigt eine vergrößerte Darstellung der Sicherungseinrichtung 1 aus Figur 1. Wie bereits erwähnt, ist in der Klemmanschette 8 ein Schwenkgelenk gelagert, dessen Schwenkachse 12 strichpunktiert angedeutet ist. D.h. zur Freigabe der von den beiden Säulen 2, 4 begrenzten Eintrittsöffnung der Fahrerkabine kann der Haltearm 6 um die Schwenkachse aus diesem Bereich herausgeschwenkt werden.

Bei dem dargestellten Ausführungsbeispiel ist die Klemmanschette 8 mit zumindest zwei Gehäuseteilen 14, 16 ausgeführt, die die B-Säule 4 umgreifen. Der Haltearm 6 ist etwa U-förmig ausgeführt, wobei die beiden Enden des Haltearms 6 in einem Endteil 18 aufgenommen sind, das über das nicht dargestellte Schwenkgelenk mit dem Gehäuseteil 14, 16 verbunden ist. Das Endteil 18 ist zu dem in Figur 2 rückwärtigen Gehäuseteil 16 hin verlängert. In dem verlängerten Teil ist eine Verriegelung 20 vorgesehen, über die in Zusammenwirken mit der Klemmanschette 8 der Haltebügel 6 in der dargestellten Verriegelungsposition festlegbar ist. Diese Verriegelung 20 kann beispielsweise ein Verriegelungzapfen sein, der beim Einschwenken des Haltebügels 6 in eine Verriegelungsaufnahme der Klemmanschette 8 einrastet. Dieser Rasteingriff kann durch das Betätigungselement 10 aufgehoben werden, das bei dem in Figur 2 dargestellten Ausführungsbeispiel als schwenkbar gelagerter Handgriff ausgeführt ist. Über den Handgriff läßt sich ein strichpunktiert angedeuteter, im inneren des Haltearms 6 geführter Bowdenzug betätigen, so daß der genannte Verriegelungszapfen aus der Verriegelungsaufnahme herausgezogen wird und der Haltearm 6 frei verschwenkbar ist.

Der zum rückwärtigen Gehäuseteil 16 hin verlängerte Abschnitt des Endteils 18 wirkt des weiteren auch als Anschlag, der die Verriegelungsposition des Haltearms 6 im Zusammenwirken mit der Klemmmanschette 8 bestimmt.

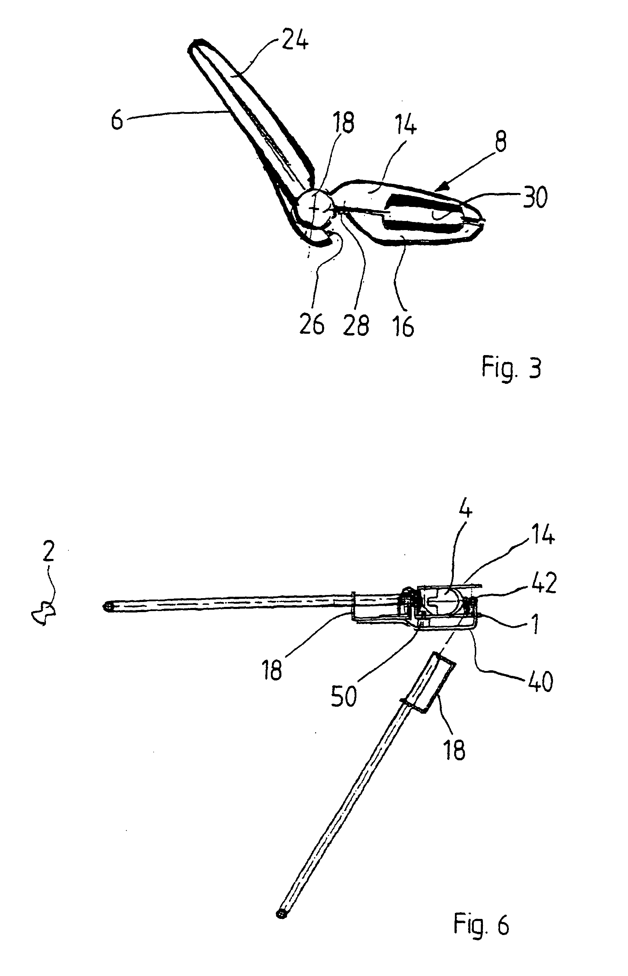

Figur 3 zeigt eine Draufsicht auf ein geringfügig modifiziertes Ausführungsbeispiel einer Sicherungseinrichtung 1, die hinsichtlich der Grundbauelemente allerdings baugleich mit dem Ausführungsbeispiel gemäß Figur 2 ist. Der einzige wesentliche Unterschied zwischen den beiden Ausführungsbeispielen besteht darin, daß gemäß Figur 3 der Haltearm 6 durch ein gepolstertes Kunststoffteil ausgeführt ist, wobei dieses Polster 24 beispielsweise durch aufclipsen auf den U-förmigen Haltearm 6 oder durch Umschäumen einer entsprechenden Tragkonstruktion gebildet werden kann. Auch bei diesem Ausführungsbeispiel erfolgt die Anbindung des Haltearms 6 an die Klemmmanschette 8 mittels des Endteils 18, das zu dem Gehäuseteil 16 hin verlängert ist. In der Darstellung gemäß Figur 3 ist der Haltearm 6 im verschwenkten Zustand dargestellt, so daß der nunmehr sichtbare Verriegelungszapfen 26 außer Eingriff mit der angedeuteten Verriegelungsaufnahme 28 ist.

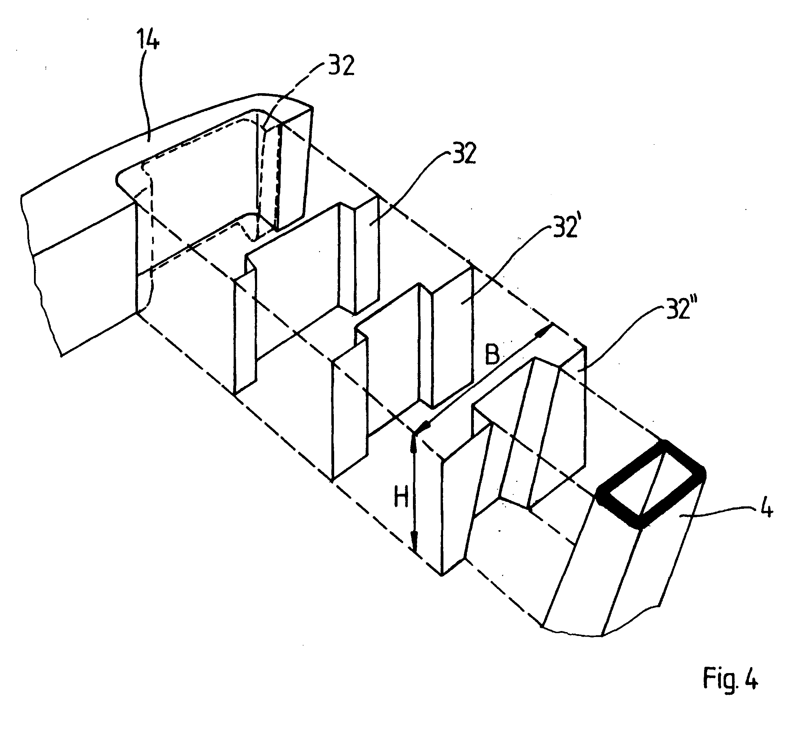

Die Klemmanschette 8 ist mit einer Durchtrittsöffnung 30 ausgebildet, deren Umriß an das Profil der B-Säule angepaßt ist. Die Umfangsflächen dieser Durchtrittsöffnung 30 werden durch in Figur 4 angedeutete Einsätze 32 gebildet, die im Gehäuseteil 14 bzw. 16 befestigt sind. Das Profil dieser Laschen 32 ist an das Profil der B-Säule 4 angepaßt, so daß die Sicherungseinrichtung 1 durch einfaches Auswechseln der Einsätze 32 an unterschiedliche B-Säulengeometrien anpaßbar sind. Der in Figur 4 mit dem Bezugszeichen 32 gekennzeichnete Einsatz ist beispielsweise für eine B-Säule mit vergleichsweise großer Breite vorgesehen. Der mittlere Einsatz 32' ist für eine schmalere B-Säule, während der Einsatz 32" für eine konisch zulaufende B-Säule vorgesehen ist. Die beiden in den Gehäuseteilen 14, 16 ausgebildeten Einsätze 32 umgreifen bei montierter Klemmanschette 8 die B-Säule kraft- und ggf. formschlüssig, so daß eine zuverlässige Befestigung der Sicherungseinrichtung 1 gewährleistet ist.

Die Gesamtbreite B und die Höhe H der Einsätze 32, 32' und 32" ist identisch, so daß keine Änderung an den Gehäuseteilen 14, 16 erforderlich sind.

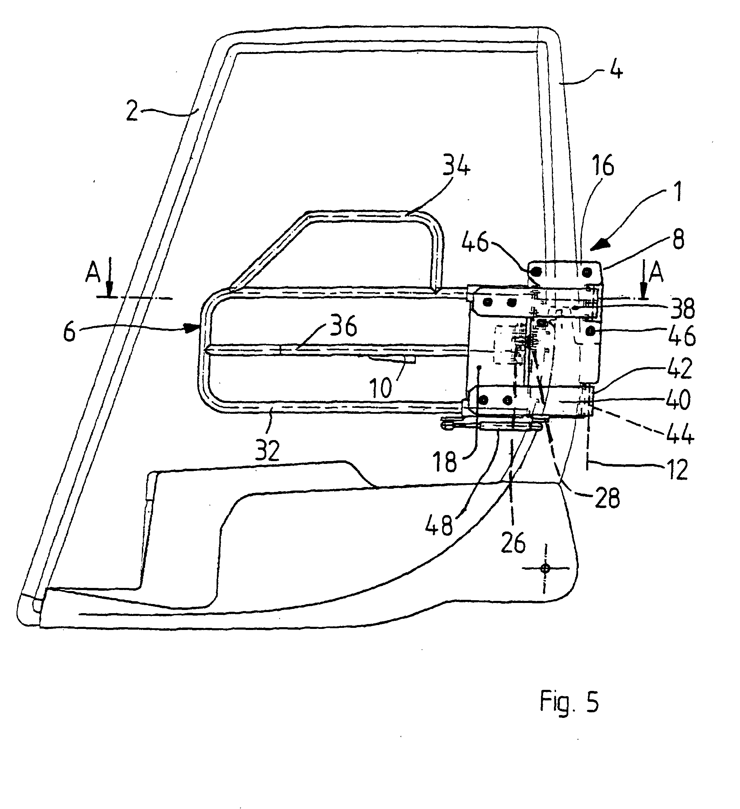

Figur 5 zeigt ein weiteres Ausführungsbeispiel einer erfindungsgemäßen Sicherungseinrichtung 1. Wie beim vorbeschriebenen Ausführungsbeispiel ist die Fahrerkabine wiederum mit einer A-Säule 2 und B-Säule 4 ausgeführt, wobei letztere die Sicherungseinrichtung 1 trägt. Figur 6 zeigt einen Schnitt entlang der Linie A-A in Figur 5 in der Verriegelungsposition und im aufgeschwenkten Zustand.

Der Einfachheit halber werden für einander entsprechende Bauelemente im folgenden die gleichen Bezugszeichen wie bei den in den Figuren 1 bis 4 dargestellten Ausführungsbeispielen verwendet.

Der Haltearm 6 des in Figur 5 dargestellten Ausführungsbeispiels hat einen U-förmigen Bügel 32, der einen sich nach oben hin erstreckenden Aufsatz 34 trägt und eine Mittelstrebe 36 hat, an der das Betätigungselement 10 gelagert ist. Die Endabschnitt der Mittelstrebe 36 und des U-förmigen Bügels 32 sind in einem Endteil 18 befestigt, das bei dem dargestellten Ausführungsbeispiel in der Ansicht gemäß Figur 6 etwa U-förmig ausgebildet ist. An der Seitenfläche dieses U-förmigen Endteils 18 sind zwei Gelenklaschen 38, 40 befestigt, die sich vom Endteil 18 über die B-Säule 4 hinaus zu deren Rückseite erstrecken. An den rückseitigen Endabschnitten der beiden Gelenklaschen 38, 40 sind Aufnahmen 42 (Figur 6) befestigt, die jeweils von einem gestrichelt angedeuteten Gelenkzapfen 44 durchsetzt sind. Diese Gelenkzapfen 44 bilden die Schwenkachse 12 des Schwenkgelenkes und sind in der Klemmanschette 8 gelagert.

Wie aus Figur 6 hervorgeht, hat die Klemmanschette 8 ebenfalls zwei Gehäuseteile 14, 16, die die B-Säule umgreifen und deren Durchtrittsöffnung 30 an das Außenprofil der B-Säule angepaßt ist. Die beiden Gehäuseteile 14, 16 sind über Klemmschrauben 46 miteinander verschraubt.

Der Haltearm 6 ist über eine Schließeinrichtung, beispielsweise eine Gasfeder 48 in seine Öffnungsposition vorgespannt, so daß die Sicherungseinrichtung 1 nur gegen die Kraft der Gasfeder 48 zu schließen ist. Dies erhöht die Betriebssicherheit, da die Bedienperson gezwungen ist, die Sicherungseinrichtung sorgfältig zu schließen.

Bei dem in Figur 5 dargestellten Ausführungsbeispiel ist die Verriegelung im Bereich zwischen den beiden beabstandeten Gelenklaschen 38, 40 angeordnet. Diese Verriegelung hat einen gestrichelt angedeuteten Verriegelungszapfen 26, der im Verriegelungszustand in eine ebenfalls gestrichelt angedeutete Verriegelungsaufnahme 28 einrastet. Dieser Eingriff kann wiederum über das Betätigungselement 10 gelöst werden, das über einen Bowdenzug oder ähnliches in Wirkverbindung mit dem verschiebbar geführten Verriegelungszapfen 26 steht.

Die Besonderheit des in Figur 5 dargestellten Ausführungsbeispiels liegt darin, daß das Schwenkgelenk an der Rückseite der B-Säule 4 angeordnet ist, während die Verriegelung 26, 28 auf der gegenüberliegenden, dem Haltebügel 6 zugewandten Seite der B-Säule 4 ausgebildet ist. Dadurch läßt sich ein verhältnismäßig großer Abstand zwischen Verriegelung und Schwenkgelenk realisieren, so daß ein zuverlässiges Schließen des Haltearms 6 gewährleistet ist. Ein weiterer Vorteil besteht darin, daß das Schwenkgelenk nicht im Bereich zwischen den beiden Säulen 2, 4 ausgebildet ist, so daß der Haltearm 6 vollständig aus dem Eintrittsbereich herausgeschwenkt werden kann und somit ein einfaches, behinderungsfreies Einsteigen in die Fahrerkabine möglich ist. Zur Verbesserung der Aufprallsicherheit und der ästhetischen Anmutung können das Endteil 18, die Gelenklaschen 38, 40 und die Klemmanschette 8 selbstverständlich verkleidet oder umschäumt werden.

Die Schließposition des Haltebügels wird über einen Anschlag 50 (Figur 6) festgelegt, auf den die Gelenklasche (n) 38 und/oder 40 in der Schließposition aufläuft.

Bei dem vorbeschriebenen Ausführungsbeispiel sind das Endteil 18, die Gelenklaschen 38, 40 und die Gehäuseteile 14, 16 als Blechprofilteile ausgeführt. Selbstverständlich können diese Teile entsprechend auch durch verstärkte Kunststoffelemente ausgebildet werden.

Auch bei dem zuletzt beschriebenen Ausführungsbeispiel kann die Rohrkonstruktion mit dem Bügel 32, dem Aufsatz 34 und der Mittelstrebe 36 abschnittsweise mit einem Polster versehen werden, das durch aufclipsen oder umschäumen gebildet ist.

Ein gemeinsames Merkmal aller Ausführungsbeispiele ist, daß die Verriegelung im Bereich der Schwenkeinrichtung vorgesehen ist, wobei die Wirkachse der Verriegelung stets in einem Abstand zu Schwenkachse ausgebildet wird, so daß über die Sicherungseinrichtung 1 hohe Rückhaltekräfte aufbringbar sind. Aufgrund der einseitigen Lagerung des Haltebügels wird der Bewegungsraum für die Bedienperson praktisch nicht eingeschränkt, wobei das Einsteigen und Aussteigen in bzw. aus der Fahrerkabine praktisch nicht behindert wird.

Offenbart ist eine Sicherungseinrichtung für die Fahrerkabine eines Nutzfahrzeuges, bei der ein Haltebügel über ein Schwenkgelenk an einer Säule befestigt ist. Im Bereich dieses Schwenkgelenks ist auch eine Verriegelungseinrichtung zum Arretieren des Haltearms in einer Schließposition.

## Patentansprüche

1. Sicherungseinrichtung für eine Fahrerkabine, mit einem an einer Säule (4) befestigten Schwenkgelenk (42, 44), das einen in eine Öffnung der Fahrerkabine hineinragenden Haltearm (6) trägt, **gekennzeichnet durch** eine Verriegelung (26, 28), die im Bereich des Schwenkgelenks (42, 44) angeordnet ist.

2. Sicherungseinrichtung nach Anspruch 1, wobei die Wirkachse der Verriegelung (26, 28) im Abstand zur Schwenkachse (12) des Schwenkgelenks (42, 44) angeordnet ist.

3. Sicherungseinrichtung nach Anspruch 1 oder 2, wobei das Schwenkgelenk (42, 44) mittels einer Klemmanschette (8) an der Säule (4) befestigt ist.

4. Sicherungseinrichtung nach Anspruch 3, wobei die Klemmanschette (8) auswechselbare Einsätze (32, 32', 32") hat, deren Profil an dasjenige der Säule (4) angepaßt ist.

5. Sicherungseinrichtung nach Anspruch 3 oder 4, wobei der Haltearm (6) in Richtung der Klemmanschette (8) über das Schwenkgelenk (42, 44) hinaus verlängert ist und ein Verriegelungselement (26) trägt, das mit einem an der Klemmanschette (8) festgelegten Verriegelungsteil (28) zusammenwirkt.

6. Sicherungseinrichtung nach einem der Ansprüche 1 bis 4, wobei das Schwenkgelenk (42, 44) auf der von dem Haltearm (6) entfernten Seite der Säule (4) und die Verriegelung (26, 28) auf der anderen, dem Haltearm (6) zugewandten Seite der Säule (4) angeordnet ist.

7. Sicherungseinrichtung nach einem der vorhergehenden Ansprüche, wobei am Haltearm (6) ein mit der Verriegelung (26, 28) in Wirkverbindung stehendes Betätigungselement (10) gelagert ist, über das die Verriegelung lösbar ist.

8. Sicherungseinrichtung nach Anspruch 7, wobei das Betätigungselement (10) über eine Zugverbindung (22) mit dem Verriegelungsteil (26) verbunden ist, so daß dieses bewegbar ist, um den Verriegelungseingriff zu lösen.

9. Sicherungseinrichtung nach einem der vorhergehenden Ansprüche, wobei der Haltearm (6) einen Rohrbügel (32) hat.

10. Sicherungseinrichtung nach einem der vorhergehenden Ansprüche, wobei der Haltearm umschäumt oder mit einem einclipsbaren Polster (24) versehen ist.

## Claims

1. A security device for a driver's compartment, including an articulated joint (42, 44) fastened to a column (4) and carrying a support arm (6) that projects into an opening of the driver's compartment, **characterized by** a latch mechanism (26, 28) arranged in the range of said articulated joint (42, 44).

2. The security device in accordance with claim 1, wherein the axis of effect of said latch mechanism (26, 28) is arranged at a distance from the pivot axis (12) of said articulated joint (42, 44).

3. The security device in accordance with claim 1 or 2, wherein said articulated joint (42, 44) is fastened to said column (4) with the aid of a clamping sleeve (8).

4. The security device in accordance with claim 3, wherein said clamping sleeve (8) has exchangeable inserts the profiles (32, 32' 32") of which are adapted to the one of said column (4).

5. The security device in accordance with claim 3 or 4, wherein said support arm (6) is prolonged beyond said articulated joint (42, 44) in a direction towards said clamping sleeve (8) and carries a latching member (26) co-operating with a latching member (28) fixed on said clamping sleeve (8).

6. The security device according to one of claims 1 to 4, wherein said articulated joint (42, 44) is arranged on the side of said column (4) facing away from said support arm (6), and said latch mechanism (26, 28) is arranged on the other side of said column (4) facing said support arm (6).

7. The security device according to one of the preceding claims, wherein on said support arm (6) an actuation member (10) is mounted which is in operative connection with said latch mechanism (26, 28) and whereby latching may be released.

8. The security device in accordance with claim 7, wherein said actuation member (10) is connected to said latching member (26) via a tensile connection (22), so that said latching member (26) is movable for releasing the latching engagement.

9. The security device according to one of the preceding claims, wherein said support arm (6) has a pipe bow (32).

10. The security device according to one of the preceding claims, wherein said support arm is foam-padded or provided with a clip-on pad (24).

## Revendications

1. Dispositif de sécurité destiné à une cabine de conducteur, avec une articulation de traînée (42, 44) fixée sur une colonne (4), qui porte un bras de retenue (6) se dressant vers l'intérieur dans une ouverture de la cabine du conducteur, **caractérisé par** un verrouillage (26, 28), qui est disposé dans la zone de l'articulation de traînée (42, 44).

2. Dispositif de sécurité selon la revendication 1, dans lequel l'axe de travail du verrouillage (26, 28) est disposé dans l'espace disponible avec l'axe de pivotement (12) de l'articulation de traînée (42, 44).

3. Dispositif de sécurité selon la revendication 1 ou 2, dans lequel l'articulation de traînée (42, 44) est fixée à la colonne (4) au moyen d'un joint de serrage (8).

4. Dispositif de sécurité selon la revendication 3, dans lequel le joint de serrage (8) comporte des garnitures de joint (32, 32', 32'') échangeables, dont le profil est adapté à celui de la colonne (4).

5. Dispositif de sécurité selon la revendication 3 ou 4, dans lequel le bras de retenue (6) est prolongé vers l'extérieur en direction du joint de serrage (8) par l'articulation de traînée (42, 44) et comporte un verrouillage (26), qui fonctionne en concomitance avec une pièce de verrouillage (28) fixée sur le joint de serrage (8).

6. Dispositif de sécurité selon l'une quelconque des revendications 1 à 4, dans lequel l'articulation de traînée (42, 44) est disposée sur le côté de la colonne (4) éloigné du bras de retenue (6) et le verrouillage (26, 28) sur l'autre côté de la colonne (4) tourné vers le bras de retenue (6).

7. Dispositif de sécurité selon l'une quelconque des revendications précédentes, dans lequel un élément de commande (10) est en liaison de travail avec le verrouillage (26, 28) et placé sur le bras de retenue (6), élément par lequel le verrouillage peut être desserré.

8. Dispositif de sécurité selon la revendication 7, dans lequel l'élément de commande (10) est relié par un assemblage de traction (22) à la pièce de verrouillage (26), de telle sorte que celui-ci peut être déplacé pour desserrer la mise en prise de verrouillage.

9. Dispositif de sécurité selon l'une quelconque des revendications précédentes, dans lequel le bras de retenue (6) comporte un piquage à plaquette (32).

10. Dispositif de sécurité selon l'une quelconque des revendications précédentes, dans lequel le bras de retenue est entouré de mousse ou muni d'un coussin (24) pouvant être fixé par un clip.
